(19) Europäisches Patentamt
European Patent Office
Office européen des brevets

(11) **EP 3 107 027 B1**

(12) **EUROPEAN PATENT SPECIFICATION**

(45) Date of publication and mention
of the grant of the patent:
**30.01.2019  Bulletin 2019/05**

(51) Int Cl.:
***G06F 21/57*** *(2013.01)*

(21) Application number: **15201794.3**

(22) Date of filing: **21.12.2015**

(54) **METHOD AND DEVICE FOR EVALUATING SECURITY ASSESSMENT OF AN APPLICATION**

VERFAHREN UND VORRICHTUNG ZUR ABSCHÄTZUNG DER SICHERHEITSBEWERTUNG EINER ANWENDUNG

PROCÉDÉ ET DISPOSITIF D'ÉVALUATION DE SÉCURITÉ D'UNE APPLICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.06.2015  IN 3057CH2015
31.07.2015  US 201514814912**

(43) Date of publication of application:
**21.12.2016  Bulletin 2016/51**

(73) Proprietor: **Wipro Limited
560 035 Karnataka (IN)**

(72) Inventor: **SRIDHAR, Kavitha
560052 Karnataka (IN)**

(74) Representative: **Finnegan Europe LLP
1 London Bridge
London SE1 9BG (GB)**

(56) References cited:
**WO-A1-2014/133528    WO-A2-2014/041561
US-A1- 2013 097 706**

**Description**

**Technical Field**

The present subject matter is related, in general to security assessment of an application and more particularly, but not exclusively to systems and methods for evaluating security assessment of an application.

**Background**

Conventionally, enterprise applications are secured by at least one of physical security, network security and access control. Recently, with an increased number of applications moving to the cloud and internet, application security has become a prime aspect that has to be addressed. This has given rise to a need for application security assessment. The enterprise applications may be assessed using Static Application Security Testing (SAST) of source code for programming patterns that could be vulnerable to security threats. Also, the enterprise applications may be also assessed using Dynamic Application Security Testing (DAST) of a running application. However, many security-analysis techniques require significant time and resources to administer, but not every application necessitates the same level or degree of analysis.

The enterprise applications could be standalone, client-server or web based applications. The security threats against which it would be desirable to protect the enterprise application include, but are not limited to, vulnerabilities in: a user Interface, web interface or a website (which could be built using HTML, CSS, JavaScript, each of which may include security threats); a database; interfaces such as REST and SOAP; message queues; web services; role based access; an authentication mechanism; files, directories and logs.

In one conventional approach, automated security checks are performed by comparing an enterprise application against a hypothetical set of uniform security standards. However, existing security software fail to estimate the security coverage of the enterprise application.

WO 2014/133528 A1 relates to assessing dynamic security scans using runtime analysis and static code analysis.

**Summary**

In one embodiment of the present disclosure, a method for evaluating security assessment of an application is provided. The method comprises receiving application entry data associated with a plurality of entry points of the application, wherein receiving the application entry data comprises receiving results of a static application security testing, a dynamic application security testing, a functionality test cases testing, and a web services testing. Further, the method comprises identifying at least one security threat entry point based on the application entry data by: analyzing the application entry data based on results of the static application security testing, the dynamic application security testing, the functionality test cases testing, and the web services testing to obtain security information; and identifying the at least one security threat entry point based on the security information. The security threat entry points are entry points, from amongst the plurality of entry points, which are to be tested. Further, the method comprises computing a coverage index value based on the application entry data and the at least one security threat entry point. The method further comprises generating a recommendation report indicating security coverage of the application based on the coverage index value. Any or all of the steps of the method may be performed by a security assessment computing device.

In another embodiment of the present disclosure, a security assessment computing device for evaluating security assessment of an application is provided. The security assessment computing device comprises a processor and a memory communicatively coupled to the processor. The memory stores processor-executable instructions, which, on execution, cause the processor to perform operations comprising receiving application entry data associated with a plurality of entry points of the application. The operations further comprise identifying at least one security threat entry point based on the application entry data. The operations further comprises computing a coverage index value based on the application entry data and the at least one security threat entry point. The operations further comprise generating a recommendation report indicating security coverage of the application based on the coverage index value.

In another embodiment of the present disclosure, a non-transitory computer readable medium for evaluating security assessment of an application is disclosed. The non-transitory computer readable medium includes instructions stored thereon that when processed by a processor causes a device to perform operations comprising receiving application entry data associated with a plurality of entry points of the application. The operations further comprise identifying at least one security threat entry point based on the application entry data. The operations further comprise computing a coverage index value based on the application entry data and the at least one security threat entry point. The operations further comprise generating a recommendation report indicating security coverage of the application based on the coverage index value.

The foregoing summary is illustrative only and is not intended to be in any way limiting. In addition to the illustrative aspects, embodiments, and features described above, further aspects, embodiments, and features will become apparent by reference to the drawings and the following detailed description.

**Brief Description of the Accompanying Drawings**

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of device or system and/or methods in accordance with embodiments of the present subject matter are now described, by way of example only, and with reference to the accompanying figures, in which:

**Fig. 1** illustrates a block diagram of an exemplary security assessment computing device for evaluating security assessment of an application in accordance with some embodiments of the present disclosure;

**Fig. 2** illustrates an exemplary block diagram of a recommendation engine in accordance with some embodiments of the present disclosure;

**Fig. 3** illustrates an exemplary method for evaluating security assessment of an application in accordance with some embodiments of the present disclosure; and

**Fig. 4** illustrates a block diagram of an exemplary computer system for implementing embodiments consistent with the present disclosure.

**Detailed Description**

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a device or system or apparatus proceeded by "comprises... a" does not, without more constraints, preclude the existence of other elements or additional elements in the device or system or apparatus.

Embodiments of the present disclosure are related to a method and a computing device for evaluating security assessment of an application. The device receives application entry data associated with a plurality of entry points of the application and identifies at least one security threat entry point based on the application entry data to compute a coverage index value. Further, the device generates a recommendation report indicating security coverage of the application based on the coverage index value.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

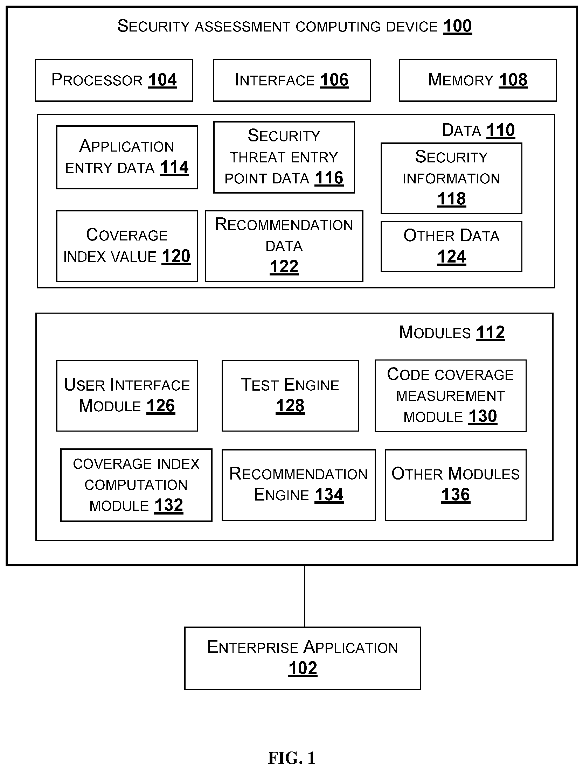

**Fig. 1** illustrates a block diagram of an exemplary security assessment computing device or security assessment device **100** for evaluating security assessment of an application in accordance with some embodiments of the present disclosure. The security assessment device **100** is communicatively connected to an enterprise application **102**. It may be noted that the security assessment device 100 may be communicatively connected to a plurality of enterprise applications simultaneously. The terms "application" and "enterprise application" are preferably used interchangeably throughout the present disclosure, unless the context provides otherwise.

The security assessment device **100** may include at least one central processing unit ("CPU" or "processor") **104** and a memory **108** storing instructions executable by the at least one processor **104**. The processor **104** may comprise at least one data processor for executing program components for executing user- or system-generated requests. A user may be a person accessing the security assessment device 100 and/or the enterprise applications 102 such as those included in this disclosure, or such a device itself. The memory **108** is communicatively coupled to the processor **104**. In an embodiment, the memory **108** stores application entry data being received by a user. The compliance management device **100** further comprises an I/O interface **106**. The I/O interface **106** is coupled with the processor **104** through which the input is received.

In an embodiment, one or more data **110** may be stored within the memory **108**. The one or more data **110** may include, for example, application entry data **114**, security threat entry point data **116**, security information **118**, coverage index value **120**, recommendation data **122** and other data **124**.

The application entry data **114** is an input associated with an application. In one embodiment, the input is provided by a user, for a predefined set of questions about one or more technologies used for at least one of building the application, the deployment architecture of an application, and/or interfaces that the application exposes for use by other applications. The input is provided by the user through one of a user interface (UI) or a graphical user interface (GUI), which are also referred to herein as an application learning UI module.

In one embodiment, the application entry data is received from multiple entities such as, but not limited to, a build web interface and/or a web service. This application entry data is automated data. The application entry data further comprises receiving results of at least one of a static application security testing (SAST), a dynamic application security testing (DAST), a functionality test cases testing and a web services testing.

The security threat entry point data **116** is associated with the entry points, from amongst the plurality of entry points, which have to be tested or which are not being tested. In one embodiment, the security threat entry point data **116** are identified by analyzing the application entry data based on results of at least one of a static application security testing (SAST), a dynamic application security testing (DAST), a functionality test cases testing, and a web services testing to obtain security information **118**. The security information **118** is used for identifying the at least one security threat entry point, wherein entry points, from amongst the plurality of entry points, which are to be tested are the security threat entry points.

The entry points are interfaces that may be assessed by a user. In an example, the entry points may be at least one of web interfaces that can be assessed by other applications, logs, files and folders that may be assessed by the user. The entry points are extracted by scanning a dump of source code, from code coverage results and/or the application learning UI. The entry point information is the base for evaluating the coverage of the assessment and determining the residual risk.

The coverage index value **120** is generated based on the application entry data and the at least one security threat entry point. The coverage index value **120** is a measure of the security of the application. In an example, the coverage index value may be computed by performing arithmetic division of a number of the at least one security threat points by a number of the entry points. The coverage index value thus provides a quantitative estimate of the degree to which the application contains security threats.

In an example embodiment, the security threat entry point may be at least one of a web interface, a web service, a database, an interface, and an authentication mechanism. The web service may be at least one of Web Services Description Language (WSDL), and JavaScript Object Notation (JSON). In an example, let the total number of entry points determined by the entry point scan and the application learning UI be "N". Also, let the number of security threat entry points for the web interface be count "A", and let the count be "B" for web services interfaces. The database is selected from at least one of a number of schemas and users configured. The coverage index value is obtained by performing arithmetic division of the sum of A and B by N.

The recommendation data **122** is generated using the coverage index value. A recommendation report is generated using the recommendation data **122**. The recommendation report may also comprise one or more of: the application entry data associated with a plurality of entry points of the application; the coverage index value; and/or one or more security threat entry points to be secured. The recommendation report can thus inform a programmer or engineer as to whether the application has a high risk of containing security threats. The recommendation report can also help the programmer or engineer to identify the security threats that ought to be resolved.

In an embodiment, the data **110** in the memory **108** is processed by the modules **112** of the processor **104**. The modules **112** may be stored within the memory **108**. Also, the modules **112** can be implemented in any suitable hardware, software, firmware, or combination thereof.

In one implementation, the modules **112** may include, for example, a user interface module **126**, a test engine **128**, a code coverage measurement module **130**, a coverage index computation module **132**, a recommendation engine **134**, and other modules **136**. The compliance management computing device **100** may also comprise other modules **134** to perform various miscellaneous functionalities of the device **100**. It will be appreciated that such aforementioned modules may be represented as a single module or a combination of different modules.

In an embodiment, the user interface (UI) module **126** receives input data or application entry data **114** of an enterprise application **102** or also referred as an application. The user interface module **126** is also referred to as an application learning user interface module. The application entry data **114** is received through a graphical user interface (GUI) or UI of the security assessment computing device, from a user of the application. The GUI presents a set of questions related to the security of the application, to understand the technologies which the user inputs the required information. The application entry data **114** comprises at least one of data associated with one or more technologies used for building the application, architecture data of the application, and data pertaining to interface of the application.

The user interface module **126** receives information on the application from multiple entities. The UI module also receives information from test engine **128** or also referred as test engine module. The test engine **128** comprises a static application security testing (SAST), dynamic application security testing (DAST), web services test data generation and functionality test cases. In SAST, the test engine **128** performs testing of the application by examining at least one of source code, byte code or application binaries of the application, for conditions indicative of a security vulnerability. In DAST, the test engine **128** performs testing of the application by examining the application in its running state.

The code coverage measurement module **130** computes the coverage index by dividing number of entry points tested by a number of security threat entry points such as, but not limited to web interfaces, web services, files, folders and database. In one embodiment, the code coverage measurement module **130** is configured to determine code coverage from security perspective. The code coverage measurement module **130** also scans through the folder contains source code and identifies all the potential entry points. Following is an example embodiment illustrating a processing of identifying the entry points:

- From the SAST, the list of entry points identified be collected as *.jsp files.
- From web services testing, a list of web interfaces collected as *.WSDL.
- From the DAST, list of user entry points, web services, users/roles etc. covered using the code coverage tools is obtained.

The coverage index computation module **132** is configured to compute the coverage index by performing arithmetic division of a number of the at least one security threat points by a number of the entry points. The security threat entry points are such as, but not limited to, web interfaces, web services, files, folders, and database.

$$\text{Coverage Index} = \text{Number of entry points tested} / \text{Total number of entry points}$$

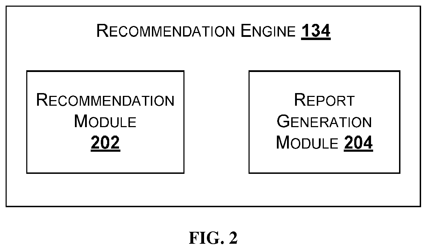

The recommendation engine or module **134**, receives the coverage index value from the coverage index computation module **132**. The sub modules of the recommendation engine **134** are illustrated in **Fig. 2**. The sub modules of the recommendation engine **130** comprise a recommendation module **202** and a report generation module **204**.

The recommendation module **202** receives the coverage index value **120** generated by the coverage index computation module **132** as input. The recommendation module **202** analyzes the coverage index value **120** and generates a recommendation about the security assessment of the application. The report generation module **204** generates a recommendation report based on the recommendation about the security assessment of the application. The recommendation report comprises application entry data associated with a plurality of entry points of the application, the coverage index value and/or one or more security threat entry points to be secured.

In one embodiment, the recommendation module **202** is configured to provide recommendations to a client or user regarding security coverage of the enterprise application based on the analysis performed by code coverage measurement module **130** and coverage index compute module **132**. The report generation module **204** provides the report about the residual risk and a list of areas that are not protected in the enterprise application. The recommendation engine **134** also transmits the recommendation to the user or client.

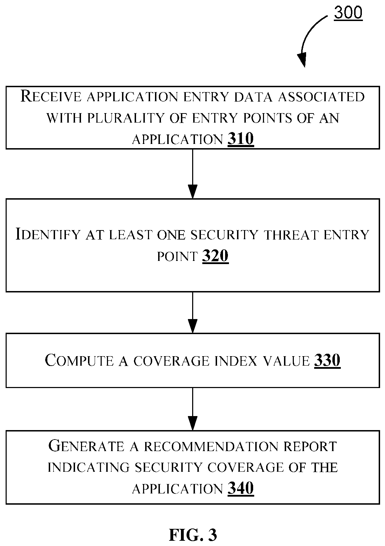

**Fig. 3** illustrates an exemplary method for evaluating security assessment of an application in accordance with some embodiments of the present disclosure.

As illustrated in **Fig. 3**, the method **300** comprises one or more blocks for evaluating security assessment of an application. The method **300** may be described in the general context of computer executable instructions. Generally, computer executable instructions can include routines, programs, objects, components, data structures, procedures, modules, and functions, which perform particular functions or implement particular abstract data types.

The order in which the method **300** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At **block 310,** receive application entry data associated with a plurality of entry points of the application. In an embodiment, the user interface (UI) module **126** receives application entry data **114** of an enterprise application **102**. The application entry data **114** is received through a graphical user interface (GUI) of the security assessment computing device, from a user of the application for a set of questions related to the security of the application. The application entry data **114** comprises at least one of data associated with one or more technologies used for building the application, architecture data of the application, and data pertaining to interface of the application.

At **block 320**, identify at least one security threat entry point based on the application entry data. The security threat entry point data **116** is associated with the entry points, from amongst the plurality of entry points, which have to be tested or which are not being tested. In one embodiment, the security threat entry point data **116** are identified by analyzing the application entry data based on results of at least one of a static application security testing (SAST), a dynamic application security testing (DAST), a functionality test cases testing, and a web services testing to obtain security information **118**. The security information **118** is used for identifying the at least one security threat entry point, wherein entry points, from amongst the plurality of entry points, which are to be tested are the security threat entry points.

At **block 330**, compute a coverage index value based on the application entry data and the at least one security threat entry point. In one embodiment, the coverage index computation module **132** computes the coverage index value by performing arithmetic division of the at least one security threat points by a number of the entry points.

At **block 340**, generate a recommendation report indicating security coverage of the application based on the coverage index value. The recommendation engine **134** receives the coverage index value **120** generated by the coverage index computation module **132** as input, to analyze the coverage index value **120** and generate a recommendation report about the security assessment of the application. The recommendation report comprises application entry data associated with a plurality of entry points of the application, the coverage index value one or more security threat entry points to be secured.

Thus, the method and the device provide evaluating security assessment of an application. In an embodiment, the present disclosure provides real-time validation of one or more configuration changes and identification of compliance violations which helps in preventing the possible damages from wrong/ insecure configurations. Also, the present disclosure certifies an application on possible residual risk security.

## Computer System

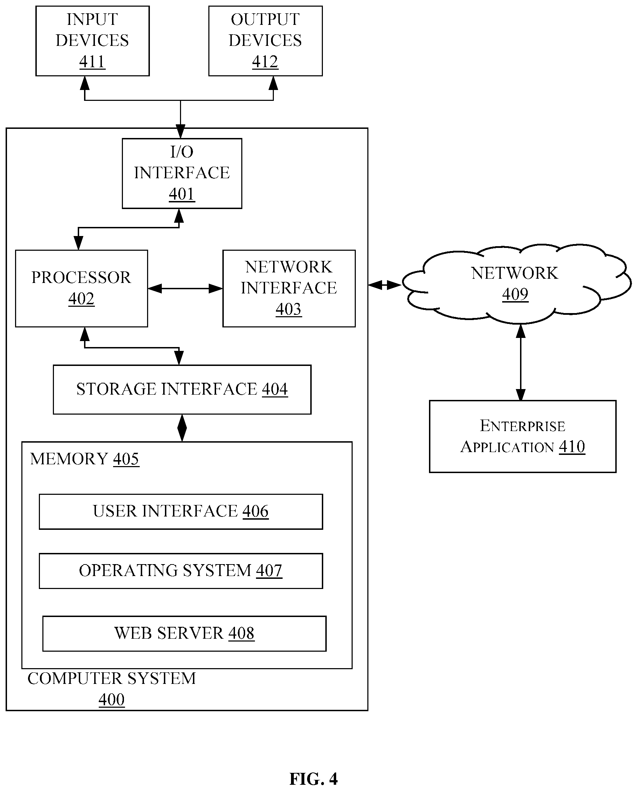

**Figure 4** illustrates a block diagram of an exemplary computer system **400** for implementing embodiments consistent with the present disclosure. In an embodiment, the computer system **400** is used to implement the security assessment computing device **100**. The computer system **400** is for evaluating security assessment of an application. The computer system **400** may comprise a central processing unit ("CPU" or "processor") **402**. The processor **402** may comprise at least one data processor for executing program components for executing user- or system-generated business processes. A user may include a person, a person using a device such as such as those included in this disclosure, or such a device itself. The processor **402** may include specialized processing units such as integrated system (bus) controllers, memory management control units, floating point units, graphics processing units, digital signal processing units, etc.

The processor **402** may be disposed in communication with one or more input/output (I/O) devices (**411** and **412**) via I/O interface **401**. The I/O interface **401** may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface **401**, the computer system **400** may communicate with one or more I/O devices (**411** and **412**). For example, the input device **411** may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device **412** may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the processor **402** may be disposed in communication with a communication network **409** via a network interface **403**. The network interface **403** may communicate with the communication network **409**. The network interface **403** may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network **409** may include, without limitation, a direct interconnection, local area network (LAN), wide area network (WAN), wireless network (e.g., using Wireless Application Protocol), the Internet, etc. Using the network interface **403** and the communication network **409**, the computer system **400** may communicate with an enterprise application **410**.

In some embodiments, the processor **402** may be disposed in communication with a memory **405** (e.g., RAM, ROM, etc. not shown in **figure 4**) via a storage interface **404**. The storage interface **404** may connect to memory **405** including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **405** may store a collection of program or database components, including, without limitation, user interface application **406**, an operating system **407**, web server **408** etc. In some embodiments, computer system **400** may store user/application data **406**, such as the data, variables, records, etc. as described in this disclosure. Such databases may be implemented as fault-tolerant, relational, scalable, secure databases such as Oracle or Sybase.

The operating system **407** may facilitate resource management and operation of the computer system **400**. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface may facilitate display, execution, interaction, manipulation, or operation of program components through textual or graphical facilities. For example, user interfaces may provide computer interaction interface elements on a display system operatively connected to the computer system **400**, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system **400** may implement a web browser **408** stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system **400** may implement a mail server stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **400** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, nonvolatile memory, hard drives, CD ROMs, DVDs, flash drives, disks, and any other known physical storage media.

Advantages of the embodiment of the present disclosure are illustrated herein.

In an embodiment, the present disclosure provides real-time validation of one or more configuration changes and identification of compliance violations which helps in containing/ preventing the possible damages from wrong/ insecure configurations.

In an embodiment, the present disclosure certifies an application on residual risk security.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may comprise media such as magnetic storage medium (e.g., hard disk drives, floppy disks, tape, etc.), optical storage (CD-ROMs, DVDs, optical disks, etc.), volatile and nonvolatile memory devices (e.g., EEPROMs, ROMs, PROMs, RAMs, DRAMs, SRAMs, Flash Memory, firmware, programmable logic, etc.), etc. Further, non-transitory computer-readable media comprise all computer-readable media except for a transitory. The code implementing the described operations may further be implemented in hardware logic (e.g., an integrated circuit chip, Programmable Gate Array (PGA), Application Specific Integrated Circuit (ASIC), etc.).

Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" comprises non-transitory computer readable medium, hardware logic, and/or transmission signals in which code may be implemented. A device in which the code implementing the described embodiments of operations is encoded may comprise a computer readable medium or hardware logic. Of course, those skilled in the art will recognize that many modifications may be made to this configuration without departing from the scope of the invention, and that the article of manufacture may comprise suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figure 3** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A computer-implemented method for evaluating security assessment of an application, comprising:

   receiving (310) application entry data (114) associated with a plurality of entry points of the application, wherein receiving the application entry data comprises receiving results of a static application security testing, a dynamic application security testing, a functionality test cases testing, and a web services testing;
   identifying (320) at least one security threat entry point (116) based on the application entry data (114) by:

      analyzing the application entry data (114) based on results of the static application security testing, the dynamic application security testing, the functionality test cases testing, and the web services testing to obtain security information; and
      identifying the at least one security threat entry point (116) based on the security information, wherein entry points, from amongst the plurality of entry points, which are to be tested are the security threat entry points;

   computing (330) a coverage index value (120) based on the application entry data (114) and the at least one security threat entry point (116); and

generating (340) a recommendation report (122) indicating security coverage of the application based on the coverage index value.

2. The method as claimed in claim 1, wherein the application entry data comprises at least one of data associated with one or more technologies used for building the application, architecture data of the application, and data pertaining to interface of the application received, through a graphical user interface, from a user of the application.

3. The method as claimed in any of the preceding claims, wherein the plurality of entry points is at least one of a build web interface, a database and one or more web services.

4. The method as claimed in any of the preceding claims, wherein the coverage index value (120) is computed by performing arithmetic division of a number of the at least one security threat points by a number of the entry points.

5. The method as claimed in any of the preceding claims, wherein the recommendation report (122) comprises one or more of: application entry data (114) associated with a plurality of entry points of the application; the coverage index value (120); and one or more security threat entry points to be secured.

6. A security assessment computing device (100) for evaluating security assessment of an application, comprising:

a processor (104) ; and
a memory (108) communicatively coupled to the processor, wherein the memory stores processor-executable instructions, which, on execution, causes the processor to perform the method of any of the preceding claims.

7. A non-transitory computer readable medium including instructions stored thereon that when processed by at least one processor cause a system to perform the method of any of claims 1 to 5.

**Patentansprüche**

1. Computerimplementiertes Verfahren zum Beurteilen der Sicherheitsbewertung einer Anwendung, aufweisend:

ein Empfangen (310) von Anwendungseingangsdaten (114), die einer Mehrzahl von Eingangspunkten der Anwendung zugehörig sind, wobei ein Empfangen der Anwendungseingangsdaten ein Empfangen von Ergebnissen einer statischen Anwendungssicherheitsprüfung, einer dynamischen Anwendungssicherheitsprüfung und einer Webdiensteprüfung aufweist;
ein Identifizieren (320) von mindestens einem Sicherheitsbedrohungs-Eingangspunkt (116) auf Grundlage der Anwendungseingangsdaten (114) durch:

ein Analysieren der Anwendungseingangsdaten (114) auf Grundlage von Ergebnissen der statischen Anwendungssicherheitsprüfung, der dynamischen Anwendungssicherheitsprüfung, der Funktionalitätstestfälleprüfung und der Webdiensteprüfung zum Erhalten von Sicherheitsinformationen; und
ein Identifizieren des mindestens einen Sicherheitsbedrohungs-Eingangspunkts (116) auf Grundlage der Sicherheitsinformationen, wobei Eingangspunkte aus der Mehrzahl von Eingangspunkten, die geprüft werden sollen, die Sicherheitsbedrohungs-Eingangspunkte sind;

ein Berechnen (330) eines Abdeckungsindexwerts (120) auf Grundlage der Anwendungseingangsdaten (114) und des mindestens einen Sicherheitsbedrohungs-Eingangspunkts (116);
und ein Generieren (340) eines Empfehlungsberichts (122), der eine Sicherheitsabdeckung der Anwendung auf Grundlage des Abdeckungsindexwerts angibt.

2. Verfahren nach Anspruch 1, wobei die Anwendungseingangsdaten mindestens Daten aufweisen, die einer oder mehreren Technologien, die zum Aufbauen der Anwendung verwendet werden, oder Architekturdaten der Anwendung oder Daten zugehörig sind, die zu der Schnittstelle der Anwendung gehören, die über eine grafische Benutzeroberfläche von einem Benutzer der Anwendung empfangen werden.

3. Verfahren nach einem der vorhergehenden Ansprüche, wobei die Mehrzahl von Eingangspunkten mindestens eine Erstellungs-Webschnittstelle, oder eine Datenbank und ein oder mehrere Webdienste ist.

**4.** Verfahren nach einem der vorhergehenden Ansprüche, wobei der Abdeckungsindexwert (120) durch Ausführen einer arithmetischen Teilung einer Anzahl der mindestens einen Sicherheitsbedrohungspunkte durch eine Anzahl der Eingangspunkte berechnet wird.

**5.** Verfahren nach einem der vorhergehenden Ansprüche, wobei der Empfehlungsbericht (122) eines oder mehreres aufweist von: Anwendungseingangsdaten (114), die einer Mehrzahl von Eingangspunkten der Anwendung zugehörig sind; dem Abdeckungsindexwert (120); und einem oder mehreren Sicherheitsbedrohungs-Eingangspunkten, die geschützt werden müssen.

**6.** Sicherheitsbewertungs-Berechnungseinheit (100) zum Beurteilen der Sicherheitsbewertung einer Anwendung, aufweisend:

einen Prozessor (104); und
einen Arbeitsspeicher (108), der in Datenaustausch mit dem Prozessor verbunden ist, wobei der Arbeitsspeicher durch den Prozessor ausführbare Anweisungen speichert, die bei Ausführung den Prozessor veranlassen, das Verfahren nach einem der vorhergehenden Ansprüche auszuführen.

**7.** Nicht flüchtiges, von einem Computer lesbares Medium mit darauf gespeicherten Anweisungen, die wenn sie durch mindestens einen Prozessor verarbeitet werden, ein System veranlassen, das Verfahren nach einem der Ansprüche 1 bis 5 auszuführen.

### Revendications

**1.** Procédé mis en oeuvre par ordinateur permettant l'évaluation de l'estimation de sécurité d'une application, comprenant :

la réception (310) de données d'entrée d'application (114) associées à une pluralité de points d'entrée de l'application, ladite réception des données d'entrée d'application comprenant la réception de résultats d'un essai de sécurité d'application statique, d'un essai de sécurité d'application dynamique, d'un essai de scénarios d'essai de fonctionnalité et d'un essai de services web ;
l'identification (320) d'au moins un point d'entrée d'une menace pour la sécurité (116) sur la base des données d'entrée d'application (114) :

l'analyse des données d'entrée d'application (114) sur la base des résultats de l'essai de sécurité d'application statique, de l'essai de sécurité d'application dynamique, de le l'essai de scénarios d'essai de fonctionnalité et de l'essai des services web afin d'obtenir des informations de sécurité ;
et l'identification du au moins un point d'entrée de menace pour la sécurité (116) sur la base des informations de sécurité, lesdits points d'entrée, parmi la pluralité des points d'entrée, qui doivent être soumis à des essais étant les points d'entrée de menace pour la sécurité ;
le calcul (330) d'une valeur d'indice de couverture (120) sur la base des données d'entrée d'application (114) et du au moins un point d'entrée de menace pour la sécurité (116) ;
et la génération (340) d'un rapport de recommandations (122) indiquant la couverture de sécurité de l'application sur la base de la valeur d'indice de couverture.

**2.** Procédé selon la revendication 1, lesdites données d'entrée d'application comprenant au moins l'une des données associées à une ou plusieurs technologies utilisées pour la construction de l'application, des données d'architecture de l'application et des données relatives à l'interface de l'application reçu, par l'intermédiaire d'une interface utilisateur graphique, en provenance d'un utilisateur de l'application.

**3.** Procédé selon l'une quelconque des revendications précédentes, ladite pluralité des points d'entrée étant au moins l'un d'une interface intégrée au web, d'une base de données et d'un ou de plusieurs services web.

**4.** Procédé selon l'une quelconque des revendications précédentes, ladite valeur d'indice de couverture (120) étant calculée en effectuant une division arithmétique d'un nombre des, au moins un, points d'entrée de menace pour la sécurité par un nombre de points d'entrée.

**5.** Procédé selon l'une quelconque des revendications précédentes, ledit rapport de recommandations (122) comprenant un ou plusieurs des : données d'entrée d'application (114) associées à une pluralité de points d'entrée de l'application ; de la valeur d'indice de couverture (120) ; et d'un ou de plusieurs points d'entrée de menace pour la sécurité à sécuriser.

6.  Dispositif de calcul d'estimation de sécurité (100) pour évaluer l'estimation de la sécurité d'une application, comprenant :

    un processeur (104) ; et
    et une mémoire (108) couplé en communication au processeur, ladite mémoire stockant des instructions exécutables par un processeur, qui, lors de l'exécution, amènent le processeur à réaliser le procédé selon l'une quelconque des revendications précédentes.

7.  Support lisible par ordinateur non transitoire comprenant des instructions stockées sur celui-ci qui, lorsqu'elles sont traitées par le au moins un processeur, amènent un système à réaliser ledit procédé selon l'une quelconque des revendications 1 à 5.

SECURITY ASSESSMENT COMPUTING DEVICE **100**

PROCESSOR **104**          INTERFACE **106**          MEMORY **108**

DATA **110**

APPLICATION ENTRY DATA **114**

SECURITY THREAT ENTRY POINT DATA **116**

SECURITY INFORMATION **118**

COVERAGE INDEX VALUE **120**

RECOMMENDATION DATA **122**

OTHER DATA **124**

MODULES **112**

USER INTERFACE MODULE **126**

TEST ENGINE **128**

CODE COVERAGE MEASUREMENT MODULE **130**

COVERAGE INDEX COMPUTATION MODULE **132**

RECOMMENDATION ENGINE **134**

OTHER MODULES **136**

ENTERPRISE APPLICATION **102**

FIG. 1

RECOMMENDATION ENGINE **134**

RECOMMENDATION
MODULE
**202**

REPORT
GENERATION
MODULE **204**

**FIG. 2**

_300_

RECEIVE APPLICATION ENTRY DATA ASSOCIATED WITH PLURALITY OF ENTRY POINTS OF AN APPLICATION **310**

IDENTIFY AT LEAST ONE SECURITY THREAT ENTRY POINT **320**

COMPUTE A COVERAGE INDEX VALUE **330**

GENERATE A RECOMMENDATION REPORT INDICATING SECURITY COVERAGE OF THE APPLICATION **340**

**FIG. 3**

INPUT
DEVICES
411

OUTPUT
DEVICES
412

I/O
INTERFACE
401

PROCESSOR
402

NETWORK
INTERFACE
403

NETWORK
409

STORAGE INTERFACE 404

ENTERPRISE
APPLICATION 410

MEMORY 405

USER INTERFACE 406

OPERATING SYSTEM 407

WEB SERVER 408

COMPUTER SYSTEM
400

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014133528 A1